# EUROPÄISCHE PATENTSCHRIFT

(11) **EP 3 009 310 B1**
(45) Veröffentlichungstag und Bekanntmachung des Hinweises auf die Patenterteilung: **12.04.2017**
(21) Anmeldenummer: 15188098.6
(22) Anmeldetag: 02.10.2015
(51) Int. Cl.: B60R 21/26

(54) **VERFAHREN ZUR LOKALISIERUNG VON INSASSENSCHUTZ- UND RÜCKHALTESYSTEMEN EINES VERUNFALLTEN KRAFTFAHRZEUGS**
METHOD FOR LOCATING PASSENGER PROTECTION AND RETENTION SYSTEMS IN A MOTOR VEHICLE WHICH HAS BEEN INVOLVED IN AN ACCIDENT
PROCEDE DE LOCALISATION DE SYSTEMES DE RETENUE ET DE PROTECTION DE PASSAGER D'UN VEHICULE AUTOMOBILE ACCIDENTE

(30) Priorität: 15.10.2014 DE 102014114958
(43) Veröffentlichungstag der Anmeldung: 20.04.2016
(73) Patentinhaber: SKIDATA AG, 5083 Grödig/Salzburg (AT)
(72) Erfinder: Harucksteiner, Guido, 5301 Eugendorf (AT)
(74) Vertreter: Karakatsanis, Georgios

(56) Entgegenhaltungen:
- EP-B1- 2 580 094
- WO-A1-2014/147721
- DE-A1- 10 338 759
- DE-A1-102006 055 141
- FR-A1- 2 970 585

## Beschreibung

Die vorliegende Erfindung bezieht sich auf ein Verfahren zur Lokalisierung von Insassenschutz- und Rückhaltesystemen eines verunfallten Kraftfahrzeugs.

Heutzutage weisen die Kraftfahrzeuge in Abhängigkeit des Fahrzeugtyps und der Ausstattung mehrere Insassenschutz- und Rückhaltesysteme auf.

Als Insassenschutzsysteme werden in der Regel Airbags eingesetzt, bei denen die zur Füllung erforderliche Gasmenge mittels Gasgeneratoren erzeugt wird, wobei die Gasgeneratoren als Festtreibstoffgeneratoren oder als Hybridgasgeneratoren ausgeführt sind. Die Festtreibstoffgeneratoren umfassen ein Gehäuse, in dem ein Festtreibstoffsatz mit einer Zündeinheit integriert ist, wobei nach Aktivierung der Zündeinheit die Treibladung gezündet wird und das beim Abbrennen der Treibladung entstehende Gas den Airbag füllt.

Bei einem Hybridgasgenerator sind ein unter hohem Druck in einem Druckbehälter komprimiertes gespeichertes Gas und ein Festtreibstoffsatz mit einer Zündeinheit vorgesehen, wobei das gespeicherte Gas unter einem Druck zwischen 200 und 600 bar steht. Durch Zünden des Festtreibstoffes wird der Druckbehälter mit dem komprimierten Gas geöffnet, wobei ein Gasgemisch aus dem Gas beim Abbrennen der Feststofftreibladung und dem komprimierten Gas entsteht, welches anschließend den Airbag füllt.

Sowohl die Festtreibstoffgeneratoren als auch die Hybridgasgeneratoren dürfen bei Rettungsarbeiten nicht beschädigt werden, da die pyrotechnischen Treibstoffe sowie für den Fall eines Hybridgasgenerators das im Druckbehälter befindliche komprimierte Gas eine potentielle Gefahr für die Rettungskräfte und die Fahrzeuginsassen darstellen. Eine Beschädigung dieser Komponenten kann unter Umständen auch zu einem Aufblasen der nicht aufgeblasenen Airbags führen, was zu Verletzungen des Rettungspersonals als auch der Fahrzeuginsassen führen kann.

Da in einem modernen Kraftfahrzeug eine hohe Anzahl an Airbags integriert ist, die beispielsweise in Form von Fahrer-, Beifahrer-, Kopf-, Knie- oder Seiten-Airbags ausgeführt sind, ist bei Rettungsarbeiten eine möglichst genaue Kenntnis der Positionen der Gasgeneratoren erforderlich, um Verletzungen zu vermeiden.

Hierbei ist aus dem Stand der Technik bekannt, für jedes Kraftfahrzeugmodell ein Rettungsdatenblatt zu erstellen, welches den Rettungskräften in in Airbag-Komponenten integrierten RFID-Chips (siehe EP2580094B) zur Verfügung steht. Dies resultiert jedoch in einem hohen Zeitverlust, da zuerst das Rettungsdatenblatt herangezogen und studiert werden muss, um einen Rettungseinsatz durchzuführen. Des Weiteren kann sich die Position der Gasgeneratoren aufgrund der Verformungen des Fahrzeugs als Resultat eines Unfalls verschoben haben, so dass das Rettungsdatenblatt nur bedingt hilfreich sein kann.

Des Weiteren weisen moderne Kraftfahrzeuge Insassenrückhaltesysteme in Form von Gurtstraffern auf, die einen Sicherheitsgut bei einem Unfall entgegen der Zugrichtung des Gurtes aufwickeln. Die Gurtstraffer umfassen eine Treibladung, wobei, wenn die Treibladung gezündet wird, die entstehenden expandierenden Gase einen Mechanismus in Bewegung setzen, welcher den Gurtwickel dreht, wodurch der Gurt angezogen wird. Analog zu den Gasgeneratoren von Airbags dürfen im Rahmen von Rettungsarbeiten bei verunfallten Fahrzeugen die Gurtstraffermechanismen, insbesondere die Treibladungen nicht beschädigt werden, da dies zu Verletzungen sowohl des Rettungspersonals als auch der Fahrzeuginsassen führen kann.

Wie bereits erläutert, kann ein Rettungsdatenblatt nicht immer zur Lokalisierung dieser Komponenten herangezogen werden, da sich die Positionen der Treibladungen von Gurtstraffern aufgrund der Verformung eines Kraftfahrzeugs durch einen Unfall verändern. Auch wird durch das Heranziehen eines Rettungsdatenblattes wertvolle Zeit verloren.

Der vorliegenden Erfindung liegt die Aufgabe zugrunde, ein Verfahren zur Lokalisierung von Insassenschutz- und Rückhaltesystemen eines verunfallten Kraftfahrzeugs vorzuschlagen, im Rahmen dessen die Insassenschutz- und Rückhaltesysteme schnell, kostengünstig und ohne die Notwendigkeit eines Rettungsdatenblattes lokalisiert werden können.

Diese Aufgabe wird durch die Merkmale des Patentanspruchs 1 gelöst. Weitere Ausgestaltungen und Vorteile gehen aus den Unteransprüchen hervor.

Demnach wird ein Verfahren zur Lokalisierung von Insassenschutz- und Rückhaltesystemen eines verunfallten Kraftfahrzeugs vorgeschlagen, im Rahmen dessen die Gasgeneratoren der Airbag-Systeme des Kraftfahrzeugs und die Gurtstraffer des Kraftfahrzeugs mittels jeweils eines aktiven oder passiven RFID-Chips, der auf den Gasgeneratoren der Airbag-Systeme und den Gurtstraffern des Kraftfahrzeugs angebracht oder in die Gasgeneratoren und Gurtstraffer integriert ist, lokalisiert werden.

Ein passiver RFID-Chip versorgt sich mit Energie aus den Funksignalen eines RFID-Lesegeräts, wobei ein aktiver RFID-Chip eine eigene Energieversorgung aufweist, die eine höhere Reichweite ermöglicht.

Hierbei können die RFID-Chips und somit auch die Gasgeneratoren und Gurtstraffer mittels eines portablen RFID-Lesegeräts lokalisiert werden, welches ein akustisches und/oder optisches Signal erzeugt, wenn ein RFID-Chip erfasst wird oder der Abstand des Gerätes zu einem RFID-Chip eines Gasgenerators oder eines Gurtstraffers eine vorgegebene Schwelle unterschreitet.

Gemäß einer Weiterbildung der Erfindung können die Farbe und/oder Intensität des optischen Signals und die Lautstärke und/oder die Tonfolge des akustischen Signals in Abhängigkeit des Abstands zum erfassten RFID-Chip variieren, um somit eine Information bezüglich des Abstandes zum RFID-Chip zu erzeugen.

Die Entfernung eines RFID-Chips zum Lesegerät kann anhand der Stärke des vom RFID-Lesegerät empfangenen Signals des RFID-Chips bestimmt werden, da die Sendeleistung der RFID-Chips bekannt ist. Der Zusammenhang zwischen Signalstärke und Entfernung kann beispielsweise in einer Kennlinie abgelegt werden.

Im Rahmen der Erfindung wird vorgeschlagen, die auf den Gasgeneratoren der Airbag-Systeme und den Gurtstraffern des Kraftfahrzeugs angebrachten oder in die Gasgeneratoren und Gurtstraffer integrierten RFID-Chips mittels jeweils in die Geräte eines Rettungssatzes integrierter RFID-Lesegeräte zu lokalisieren, wobei die Geräte des Rettungssatzes, wie beispielsweise Rettungsspreizer, Rettungsscheren, Schneidgeräte etc. umfassend jeweils ein RFID-Lesegerät ein optisches und/oder akustisches Signal erzeugen, wenn ein RFID-Chip erfasst wird oder der Abstand eines Gerätes zu einem RFID-Chip eines Airbag-Gasgenerators oder eines Gurtstraffers eine vorgegebene Schwelle unterschreitet. Hierbei können die Farbe und/oder Intensität des optischen Signals und die Lautstärke und/oder die Tonfolge des akustischen Signals in Abhängigkeit des Abstands zum erfassten RFID-Chip variieren, um somit eine Information bezüglich des Abstandes zum RFID-Chip zu erzeugen.

Durch die erfindungsgemäße Konzeption wird ein Verfahren zur Lokalisierung von Insassenschutz- und Rückhaltesystemen eines verunfallten Kraftfahrzeugs zur Verfügung gestellt, durch dessen Durchführung die Insassenschutz- und Rückhaltesysteme auch bei einer unfallbedingten Verformung des Kraftfahrzeugs schnell, kostengünstig und zuverlässig lokalisiert werden können.

## Patentansprüche

1. Verfahren zur Lokalisierung von Insassenschutz- und Rückhaltesystemen eines verunfallten Kraftfahrzeugs, bei welchem die Gasgeneratoren der Airbag-Systeme und die Gurtstraffer des Kraftfahrzeugs mittels jeweils eines aktiven oder passiven RFID-Chips, der auf den Gasgeneratoren der Airbag-Systeme und den Gurtstraffern des Kraftfahrzeugs angebracht oder in die Gasgeneratoren und Gurtstraffer integriert ist, lokalisiert werden und die RFID-Chips mittels in die Geräte eines Rettungssatzes integrierter RFID-Lesegeräte lokalisiert werden, wobei die Geräte des Rettungssatzes, umfassend jeweils ein RFID-Lesegerät ein optisches und/oder akustisches Signal erzeugen, wenn ein RFID-Chip erfasst wird oder wenn der Abstand eines Gerätes zu einem RFID-Chip eines Gasgenerators oder eines Gurtstraffers eine vorgegebene Schwelle unterschreitet.

2. Verfahren zur Lokalisierung von Insassenschutz- und Rückhaltesystemen eines verunfallten Kraftfahrzeugs nach Anspruch 1, **dadurch gekennzeichnet, dass** die RFID-Chips und somit auch die Gasgeneratoren und Gurtstraffer mittels eines portablen RFID-Lesegeräts lokalisiert werden, welches ein akustisches und/oder optisches Signal erzeugt, wenn ein RFID-Chip erfasst wird oder wenn der Abstand des Gerätes zu einem RFID-Chip eines Gasgenerators oder eines Gurtstraffers eine vorgegebene Schwelle unterschreitet.

3. Verfahren zur Lokalisierung von Insassenschutz- und Rückhaltesystemen eines verunfallten Kraftfahrzeugs nach Anspruch 2, **dadurch gekennzeichnet, dass** die Farbe und/oder Intensität des optischen Signals und die Lautstärke und/oder die Tonfolge des akustischen Signals in Abhängigkeit des Abstands zum erfassten RFID-Chip variieren, um eine Information bezüglich des Abstandes zum RFID-Chip zu erzeugen.

## Claims

1. A method for locating vehicle passenger protection and restraint systems in a motor vehicle involved in an accident, in which the gas generators of the airbag systems and the seat-belt tensioners of the motor vehicle are each located by means of an active or passive RFID chip, which is attached to the gas generators of the airbag systems and the seat-belt tensioners of the motor vehicle or integrated into the gas generators and seat-belt tensioners, and the RFID chips are located by means of RFID readers integrated in the devices of a rescue assembly, wherein the devices of the rescue assembly, comprising an RFID reader in each case, generate an optical and/or acoustic signal when an RFID chip is detected or when the distance of a device from an RFID chip of a gas generator or a seat-belt tensioner falls short of a predetermined threshold.

2. The method for locating vehicle passenger protection and restraint systems in a motor vehicle involved in an accident according to claim 1, **characterized in that** the RFID chips and therefore the gas generators and seat-belt tensioners too are located by means of a portable RFID reader which generates an acoustic and/or optical signal when an RFID chip is detected or when the distance of the device from an RFID chip of a gas generator or a seat-belt tensioner falls below a predetermined threshold.

3. The method of locating vehicle passenger protection and restraint systems in a motor vehicle involved in an accident according to claim 1 or 2, **characterized in that** the colour and/or intensity of the optical signal and the volume and/or the sequence of tones of the acoustic signal vary depending on the distance from the detected RFID chip, in order to generate information in relation to the distance from the RFID chip.

## Revendications

1. Procédé de localisation de systèmes de retenue et protection des passagers d'un véhicule automobile accidenté, dans lequel les générateurs de gaz des systèmes d'airbag et de tendeur de ceinture du véhicule automobile sont localisés au moyen respectivement d'une puce RFID active ou passive, qui est montée sur les générateurs de gaz des systèmes d'air et les tendeurs de ceinture du véhicule automobile ou est intégrée dans les générateurs de gaz ou tendeurs de ceinture, et les puces RFID sont localisées au moyen de lecteurs RFID intégrés dans les appareils d'un kit de sauvetage, dans lequel les appareils du kit de sauvetage, comprenant respectivement un lecteur RFID génèrent un signal optique et/ou acoustique, lorsqu'une puce RFID est détectée ou lorsqu'un écart d'un appareil par rapport à une puce RFID d'un générateur de gaz ou d'un tendeur de ceinture ne dépasse pas un seuil prescrit.

2. Procédé de localisation de systèmes de retenue et protection des passagers d'un véhicule automobile accidenté selon la revendication 1, **caractérisé en ce que** les puces RFID et donc aussi les générateurs de gaz et les tendeurs de ceinture sont localisés au moyen d'un lecteur RFID portable, qui génère un signal acoustique et/ou optique, lorsqu'une puce RFID est détectée ou lorsque l'écart de l'appareil par rapport à une puce RFID d'un générateur de gaz ou d'un tendeur de ceinture ne dépasse pas un seuil prescrit.

3. Procédé de localisation de systèmes de retenue et protection des passagers d'un véhicule automobile accidenté selon la revendication 2, **caractérisé en ce que** la couleur et/ou l'intensité du signal optique et le volume sonore et/ou la séquence sonore du signal acoustique varient en fonction de l'écart par rapport à la puce RFID détectée, afin de générer une information relative à l'écart par rapport à la puce RFID.
